# EUROPEAN PATENT APPLICATION

(11) **EP 3 388 805 A1**
(43) Date of publication of application: **17.10.2018**
(21) Application number: 16872574.5
(22) Date of filing: 25.03.2016
(51) Int. Cl.: G01K 7/24, G01K 1/14, G03G 15/20

(54) **ABNORMAL TEMPERATURE DETECTING CIRCUIT**

(30) Priority: 07.12.2015 JP 2015238567
(71) Applicant: Mitsubishi Materials Corporation, Chiyoda-ku Tokyo 100-8117 (JP)
(72) Inventor: NISHIYAMA, Masashi, Naka-shi Ibaraki 311-0102 (JP); HIRANO, Shingo, Naka-shi Ibaraki 311-0102 (JP); TARI, Kazuyoshi, Saitama-shi Saitama 330-8508 (JP); NAKAMURA, Kenzou, Naka-shi Ibaraki 311-0102 (JP)
(74) Representative: Hoffmann Eitle
(86) International application number: PCT/JP2016/001747
(87) International publication number: WO 2017/098672

(57) **Abstract**

An abnormal temperature detection circuit according to the present invention includes: a differential output detection circuit portion C1 having a detection thermistor and a compensation thermistor configured to detect a differential output between an output of the detection thermistor and an output of the compensation thermistor; a threshold setting circuit portion C2 that is an analog circuit configured to change a determination threshold for determining whether a temperature detected by the detection thermistor is an abnormal temperature in accordance with the output of the compensation thermistor and to output the changed determination threshold; and an abnormal temperature determination circuit portion C3 configured to output an abnormal temperature detection signal when the differential output is lower than the determination threshold that has been output.

## Description

### BACKGROUND OF THE INVENTION

### [Field of the Invention]

The present invention relates to an abnormal temperature detection circuit that can determine whether a fuser roller or the like, for example, has reached an abnormal temperature using a thermistor.

### [Description of the Related Art]

Conventionally, a thermistor is used as a temperature sensor for measuring a temperature of an object to be measured such as a fuser roller or the like used in a copying machine, printer, or the like by detecting infrared radiation radiated from the object in a non-contact manner. While a temperature of a fuser roller or the like is measured using such a thermistor, the fuser roller or the like may be heated to an abnormal temperature, and in that case the operation of the apparatus must be stopped. Hence, an abnormal temperature detection circuit is used for detecting the high-temperature anomaly of a fuser roller or the like based on the temperature detected by the thermistor.

For example, Patent document 1 discloses a technology using a non-contact temperature sensor including a temperature detection circuit and a comparison operation circuit. Specifically, these circuits are configured to control the temperature of a fuser device by obtaining an output signal ΔT of the surface temperature of the fuser roller that is based on a differential output between a heat sensitive element for temperature compensation and a heat sensitive element for infrared detection and is offset by the effect of an ambient temperature, and then comparing the output signal ΔT with the threshold of the temperature setting circuit. Patent document 1 also discloses an alternative method for detecting the surface temperature of a fuser roller using a digital temperature control circuit in a microcomputer so as to control the temperature of the fuser.

### [Prior Art Document]

### [Patent Document]

[Patent Document 1] Japanese Unexamined Patent Application Publication No. 2008-111849 (see the paragraphs [0029] to [0032], and FIGs. 7 and 8)

### SUMMARY OF THE INVENTION

### [Problems to be solved by the Invention]

The following problems still remain in the conventional technologies described above.

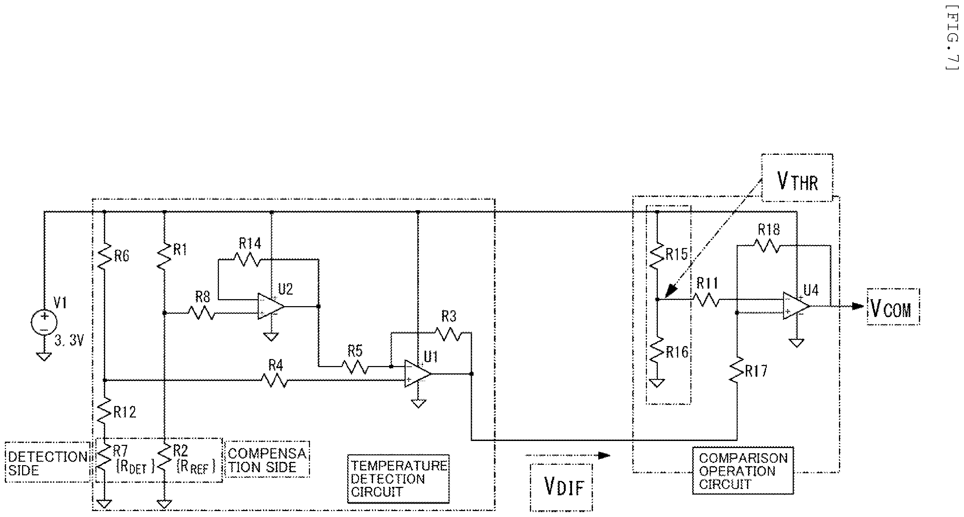

Conventionally, the high-temperature anomaly is determined by a fixed constant threshold that is set in a temperature setting circuit. However, a range of temperature over which an abnormal temperature can be detected so as to stop the operation of a fuser roller or the like is inconveniently narrow because the resistance-temperature characteristic of a thermistor is not linear. For example, as shown in FIG. 7, an abnormal temperature detection circuit wherein a constant threshold voltage V_{THR} is set by a resistance R15 and a resistance R16 will be described below. This circuit is composed of a temperature detection circuit configured to output a differential voltage V_{DIF} calculated from an output voltage V_{DET} (which corresponds to a detection temperature T_{DET}) of a thermistor for detection (hereafter referred to as "detection thermistor") R7 and an output voltage V_{REF} (which corresponds to a compensation temperature T_{REF}) of a thermistor for compensation (hereafter referred to as "compensation thermistor") R2, and a comparison operation circuit configured to compare the differential voltage V_{DIF} with a constant threshold voltage V_{THR} and to output a signal output V_{COM} for instructing to perform or stop the heating of a fuser roller.

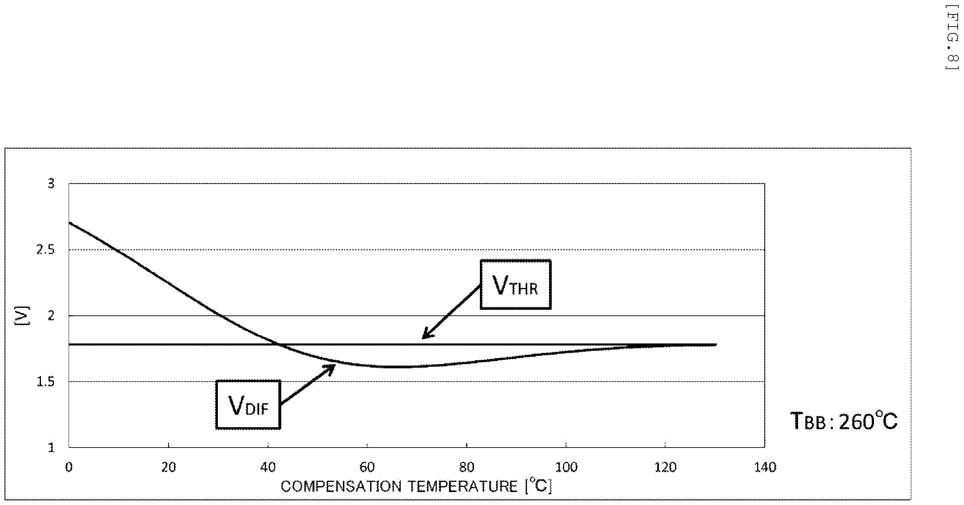

According to this circuit example, as shown in FIG. 8, when the heating of a fuser roller is set to be turned "OFF" when "V_{DIF}-V_{THR} < 0" with respect to the compensation temperature-output voltage characteristic (object temperature T_{BB} (blackbody temperature): 260°C) of the differential voltage V_{DIF} calculated from an output voltage V_{DET} of the detection thermistor R7 and an output voltage V_{REF} of the compensation thermistor R2, the differential voltage V_{DIF} can exceed the threshold voltage V_{THR} in the area where the compensation temperature obtained by the compensation thermistor R2 is below 40°C, which may preclude the detection of an abnormal temperature, and accordingly the heating of the fuser roller cannot be turned "OFF". Specifically, in the conventional circuit, the high-temperature anomaly cannot be detected when the fuser roller has reached an abnormally high temperature before an ambient temperature (compensation temperature) is enough high.

When a microcomputer control is used, a threshold for each compensation temperature can be precisely set, but this may disadvantageously increase the cost. Besides, since the abnormal temperature detection function by the microcomputer control may not work well due to thermal runaway, it should be desirably avoided.

The present invention has been made in view of the aforementioned circumstances, and an object of the present invention is to provide an abnormal temperature detection circuit that can detect the high-temperature anomaly of a fuser roller or the like with high accuracy over a wider range of temperature without use of a microcomputer control.

### [Means for Solving the Problems]

The present invention adopts the following configuration in order to overcome the aforementioned problems. Specifically, an abnormal temperature detection circuit according to a first aspect of the present invention comprises: an differential output detection circuit portion having a detection thermistor and a compensation thermistor configured to detect a differential output between an output of the detection thermistor and an output of the compensation thermistor; a threshold setting circuit portion that is an analog circuit configured to change a threshold for determination (hereafter referred to as "determination threshold") for determining whether a temperature detected by the detection thermistor is an abnormal temperature in accordance with the output of the compensation thermistor and to output the changed determination threshold; and an abnormal temperature determination circuit portion configured to output an abnormal temperature detection signal when the differential output is lower than the determination threshold that has been output.

Since the abnormal temperature detection circuit of the first aspect comprises the threshold setting circuit portion that is an analog circuit configured to change a determination threshold for determining whether a temperature detected by the detection thermistor is an abnormal temperature in accordance with the output of the compensation thermistor and to output the changed determination threshold, and the abnormal temperature determination circuit portion configured to output an abnormal temperature detection signal when the differential output is lower than the determination threshold that has been output, the determination threshold can be changed in accordance with the nonlinearity of the resistance-temperature characteristic of a thermistor by using the compensation temperature output for setting the determination threshold. As a consequence, an abnormal temperature can be detected with high accuracy by a simple circuit over a wider range of temperature compared with the prior art.

An abnormal temperature detection circuit according to a second aspect of the present invention is characterized by the abnormal temperature detection circuit according to the first aspect, wherein the threshold setting circuit portion is configured to change the determination threshold in accordance with the output of the compensation thermistor when the compensation temperature obtained by the output of the compensation thermistor is lower than the predetermined temperature, and to set the determination threshold as a constant fixed value when the compensation temperature obtained by the output of the compensation thermistor is higher than the predetermined temperature.

Specifically, in this abnormal temperature detection circuit, since the threshold setting circuit portion is configured to change the determination threshold in accordance with the output of the compensation thermistor when the compensation temperature obtained by the output of the compensation thermistor is lower than the predetermined temperature, and to set the determination threshold as a constant fixed value when the compensation temperature obtained by the output of the compensation thermistor is higher than the predetermined temperature, the determination threshold can be divided into a variable area and a constant area in accordance with the nonlinearity of the resistance-temperature characteristic of a thermistor. As a consequence, the high-temperature anomaly can be detected with high accuracy by a simple circuit configuration.

An abnormal temperature detection circuit according to a third aspect of the present invention is characterized by the abnormal temperature detection circuit according to the first or second aspect, wherein the threshold setting circuit portion can adjust the input level of the output of the compensation thermistor using a voltage divider circuit composed of two resistances.

Specifically, in this abnormal temperature detection circuit, the threshold setting circuit portion can adjust the input level of the output of the compensation thermistor using a voltage divider circuit composed of two resistances, the threshold voltage for the dependent part of the compensation thermistor voltage can be readily changed based on the resistance ratio of the two resistances.

An abnormal temperature detection circuit according to a fourth aspect of the present invention is characterized by the abnormal temperature detection circuit according to any one of the first to third aspects, wherein the detection thermistor is a temperature sensor for measuring a temperature of a fuser roller used in an image-forming apparatus.

Specifically, in this abnormal temperature detection circuit, since the detection thermistor is a temperature sensor for measuring a temperature of a fuser roller used in an image-forming apparatus, the high-temperature anomaly of the fuser roller can be detected over a wide range of temperature so as to stop the heating of the roller.

### [Effects of the Invention]

According to the present invention, the following effects may be provided.

Specifically, since the abnormal temperature detection circuit of the present invention includes the threshold setting circuit portion that is an analog circuit configured to change a determination threshold for determining whether a temperature detected by the detection thermistor is an abnormal temperature in accordance with an output of the compensation thermistor and to output the changed determination threshold, and the abnormal temperature determination circuit portion configured to output an abnormal temperature detection signal when the differential voltage output is lower than the determination threshold that has been output, the determination threshold can be changed in accordance with the nonlinearity of the resistance-temperature characteristic of a thermistor. As a consequence, an abnormal temperature can be detected with high accuracy over a wider range of temperature compared with the prior art.

In particular, when the detection thermistor is used as a temperature sensor for measuring a temperature of a fuser roller used in an image-forming apparatus, the high-temperature anomaly of the fuser roller can be detected over a wide range of temperature so as to stop the heating of the roller.

### BRIEF DESCRIPTION OF THE DRAWINGS

FIG. 1 is a block diagram showing an abnormal temperature detection circuit according to one embodiment of the present invention.
FIG. 2 is a circuit diagram showing the abnormal temperature detection circuit according to the present embodiment.
FIG. 3 is a graph showing the relationship of a threshold voltage and a differential voltage relative to a compensation temperature in the present embodiment.
FIG. 4 is a graph showing a threshold voltage relative to a compensation temperature when the ratio of a resistance R15 to a resistance R16 is changed in the present embodiment.
FIG. 5 is a graph showing a threshold voltage relative to a compensation temperature when the ratio of a resistance R10 to a resistance R13 is changed in the present embodiment.
FIG. 6 is a graph showing a differential voltage and a threshold voltage relative to a compensation temperature for a plurality of object temperature T_{BB} conditions in the present embodiment.
FIG. 7 is a circuit diagram showing an abnormal temperature detection circuit according to a Reference Example of the present invention.
FIG. 8 is a graph showing the relationship of a threshold voltage and a differential voltage relative to a compensation temperature in the Reference Example of the present invention.

### DESCRIPTION OF THE EMBODIMENTS

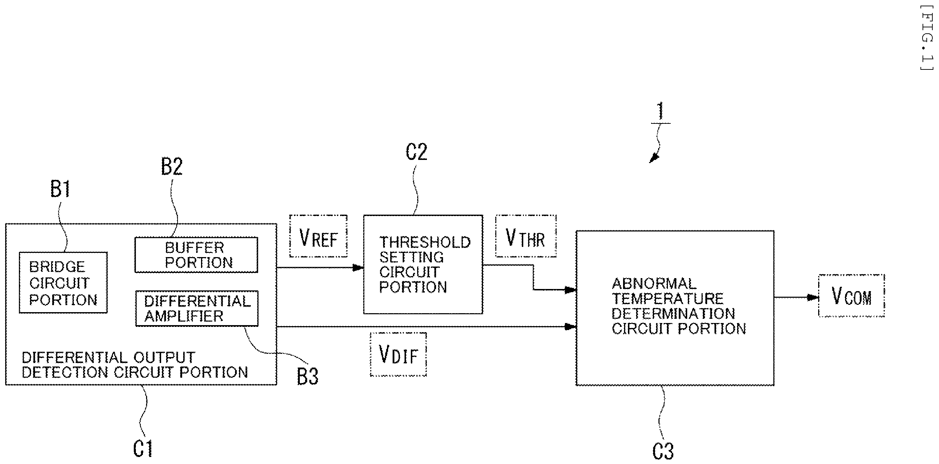

Hereinafter, an abnormal temperature detection circuit according to one embodiment of the present invention will be described with reference to FIGs. 1 to 5.

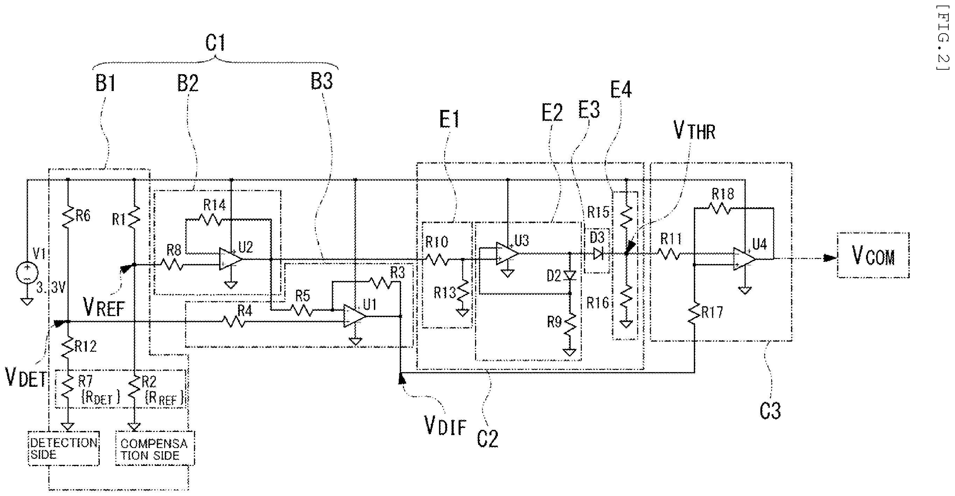

An abnormal temperature detection circuit 1 of the present embodiment is a circuit for detecting the high-temperature anomaly of a fuser roller used in an image-forming apparatus, which, as shown in FIGs. 1 and 2, includes a differential output detection circuit portion C1 having a detection thermistor R7 and a compensation thermistor R2 configured to detect a differential output (differential voltage V_{DIF}) between an output of the detection thermistor R7 and an output of the compensation thermistor R2, a threshold setting circuit portion C2 that is an analog circuit configured to change a determination threshold V_{THR} for determining whether a temperature detected by the detection thermistor R7 is an abnormal temperature in accordance with the output of the compensation thermistor R2 (compensation thermistor voltage V_{REF}) and to output the changed determination threshold, and an abnormal temperature determination circuit portion C3 configured to output an abnormal temperature detection signal (signal output V_{COM}) when the differential output is lower than the determination threshold V_{THR} that has been output.

The threshold setting circuit portion C2 also has an arithmetic operation function of changing a determination threshold V_{THR} in accordance with an output of the compensation thermistor R2 when a compensation temperature obtained by the output of the compensation thermistor R2 is lower than the predetermined temperature, and of setting the determination threshold V_{THR} as a constant fixed value when the compensation temperature obtained by the output of the compensation thermistor R2 is higher than the predetermined temperature.

The detection thermistor R7, which is a non-contact temperature sensor that can receive infrared radiation so as to detect a temperature, is arranged opposed to a fuser roller used in an object to be measured so that it can receive infrared radiation radiated from the fuser roller so as to detect a temperature of the fuser roller. The compensation thermistor R2 has the same configuration as that of the detection thermistor R7, but it can detect an ambient temperature (compensation temperature) by blocking the infrared radiation radiated from the fuser roller.

In addition, both of the detection thermistor R7 and the compensation thermistor R2 are NTC thermistor elements.

The differential output detection circuit portion C1 includes a bridge circuit portion B1 composed of the detection thermistor R7, the compensation thermistor R2, a resistance R1, a resistance R6, and a resistance R12; a buffer portion B2 configured to receive a compensation thermistor voltage V_{REF} from the bridge circuit portion B1 and to output the compensation thermistor voltage V_{REF} with a gain of 1; and a differential amplifier portion B3 configured to receive the compensation thermistor voltage V_{REF} through the buffer portion B2 and a detection thermistor voltage V_{DET} directly from the detection thermistor so as to amplify the difference (V_{DET}-V_{REF}) and to output a differential voltage V_{DIF} as a differential output.

The buffer portion B2 is an impedance converting circuit for reducing the output resistance of the compensation thermistor voltage V_{REF}.

The gain of the differential voltage V_{DIF} depends on the ratio of "resistance R3/resistance R5".

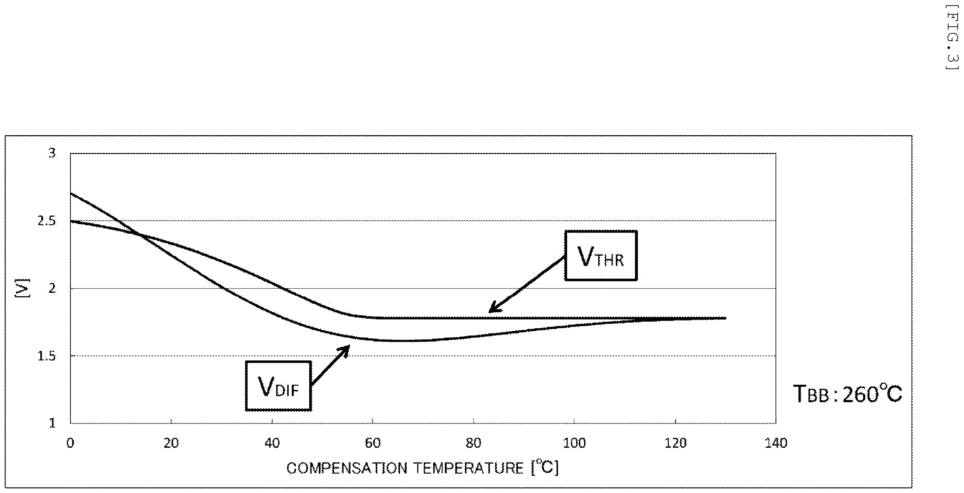

The threshold setting circuit portion C2 is a circuit configured to receive a compensation thermistor voltage V_{REF} that is output from the buffer portion B2 so as to calculate a determination threshold V_{THR}, which includes a first arithmetic section E1 configured to determine the dependent part of the compensation thermistor voltage V_{REF} (the curved line portion on the left side of FIG. 3) for the determination threshold V_{THR} by dividing the compensation thermistor voltage V_{REF}; a third arithmetic section E3 that is a diode D3 configured to conduct no current and then set the determination threshold V_{THR} as a constant value (the horizontal portion on the right side of FIG. 3) when the input side is low and to output the voltage of the dependent part of the compensation thermistor voltage V_{REF} (the curved line portion on the left side of FIG. 3) when the input side is high; a second arithmetic section E2 that is provided between the first arithmetic section E1 and the third arithmetic section E3 configured to compensate the temperature dependence of the diode D3; and a fourth arithmetic section E4 configured to determine the constant portion (the horizontal portion on the right side of FIG. 3) of the determination threshold V_{THR} by dividing the determination threshold V_{THR} based on the ratio of "resistance R15/resistance R16".

The second arithmetic section E2 is a circuit configured to compensate the temperature dependence of the diode D3 using a diode D2 that is provided within the same package and is thermally coupled to the diode D3 because the forward voltage drop of the diode D3 has a temperature dependence.

Note that the third arithmetic section E3 is a diode that does not start conducting current at a difference of 0 V, but starts it when the input side becomes higher by a voltage drop (e.g., about 0.7 V). This voltage drop (e.g., about 0.7 V) has a temperature dependence and hence the threshold maybe varied to, for example, 0.6 V or the like depending on the temperature. The second arithmetic section E2 is thus provided for performing this correction.

The diode D3 of the third arithmetic section E3 is turned "ON" or "OFF" depending on the compensation thermistor voltage V_{REF}. Specifically, the voltage value depending on the compensation thermistor voltage V_{REF} is output as a determination threshold V_{THR} when the diode D3 is turned "ON", and the constant voltage value depending on the ratio of "resistance R15/resistance R16" is output as a determination threshold V_{THR} when the diode D3 is turned "OFF".

In the first arithmetic section E1, the input level of the compensation thermistor voltage V_{REF} into the second arithmetic section E2 can be adjusted based on the ratio of "resistance R10/resistance R13". Specifically, the threshold setting circuit portion C2 can adjust the input level of the output of the compensation thermistor R2 into the second arithmetic section E2 using a voltage divider circuit composed of two resistances R10 and R13.

The abnormal temperature determination circuit portion C3 has a function of outputting a signal output V_{COM} so as to control heating depending on which value is higher or lower, the differential voltage V_{DIF} or the determination threshold V_{THR}.

Specifically, this abnormal temperature determination circuit portion C3 is a comparison operation portion configured to output a signal output V_{COM} that is a fixed value determined depending on whether it is "V_{DIF}-V_{THR} > 0" or "V_{DIF}-V_{THR} < 0", that is, it outputs the signal output V_{COM} (e.g., 3.3 V) for instructing to perform heating when "V_{DIF}-V_{THR} > 0" and outputs the signal output V_{COM} (e.g., -3.3 V) for instructing to stop heating when "V_{DIF}-V_{THR} < 0".

For example, as shown in FIG. 3, the abnormal temperature detection circuit 1 of the present embodiment is set to turn "OFF" the heating of a fuser roller when "V_{DIF}-V_{THR} < 0" with respect to the compensation temperature-output voltage characteristic (target (fuser roller) temperature T_{BB} (blackbody temperature): 260°C) of the differential voltage V_{DIF} calculated from a detection temperature T_{DET} of the detection thermistor R7 and a detection temperature T_{REF} of the compensation thermistor R2. This shows that in this case of the present embodiment, the heating of a fuser roller can be turned "OFF" over a range of compensation temperature from 40°C to about 20°C that is the temperature range the conventional circuit cannot detect.

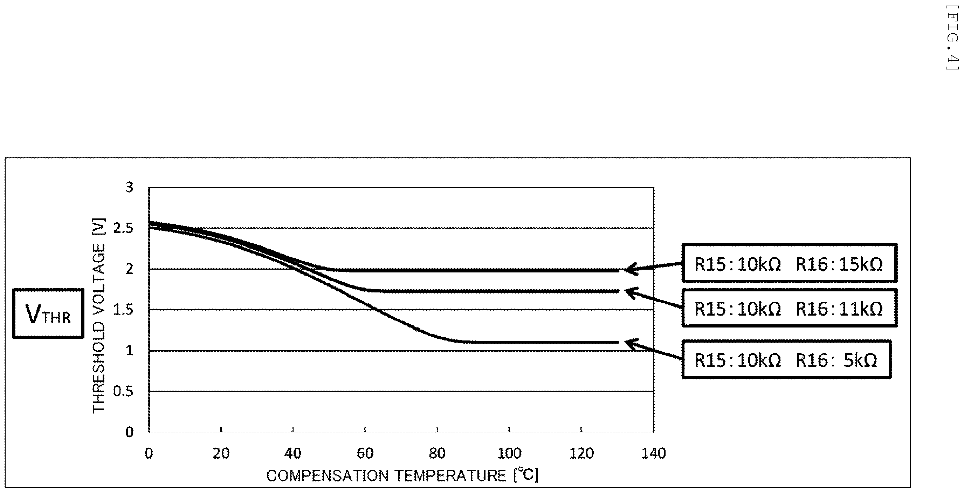

In addition, in the present embodiment, a threshold level can be adjusted by changing the ratio of the resistance R15 to the resistance R16 of the fourth arithmetic section E4. For example, as shown in FIG. 4, by changing the value of the resistance R16 relative to the resistance R15 having a constant value, the level of the constant portion of the determination threshold V_{THR} (the horizontal portion on the right side of FIG. 4) can be changed.

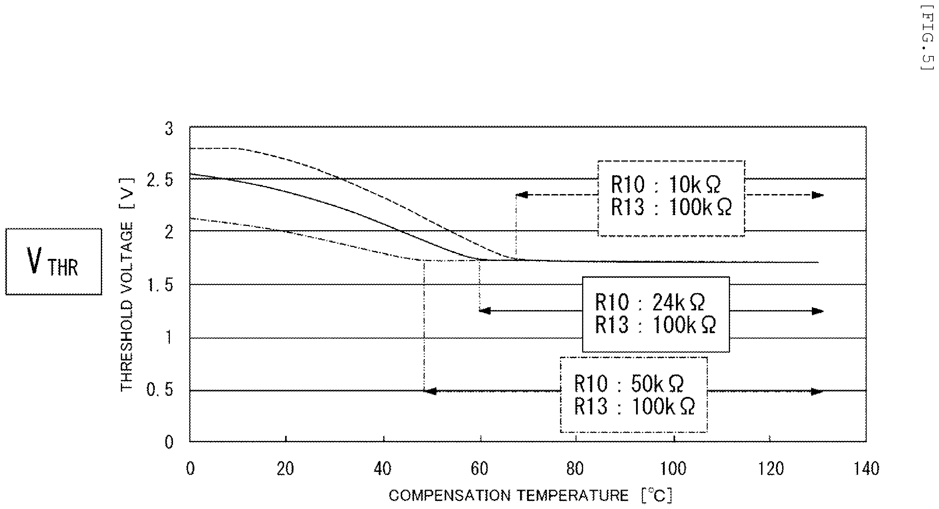

Furthermore, in the present embodiment, the input level of the compensation thermistor voltage V_{REF} into the second arithmetic section E2 can be adjusted by changing the ratio of the resistance R10 to the resistance R13 of the first arithmetic section E1. For example, as shown in FIG. 5, when the value of the resistance R10 is changed relative to the resistance R13 having a constant value, the voltage across the diode D3 is changed by the divided pressure based on the ratio of the resistance R10 to the resistance R13, and accordingly the range over which the diode D3 is turned "OFF" is changed. As a consequence, the threshold voltage for the dependent part of the compensation thermistor voltage V_{REF} (the curved line portion on the left side of FIG. 5) can be changed. Specifically, in the abnormal temperature detection circuit 1 of the present embodiment, the compensation temperature being the predetermined temperature described above where the dependent part described above is switched to the constant portion can be changed to a range from about 50°C to about 70°C.

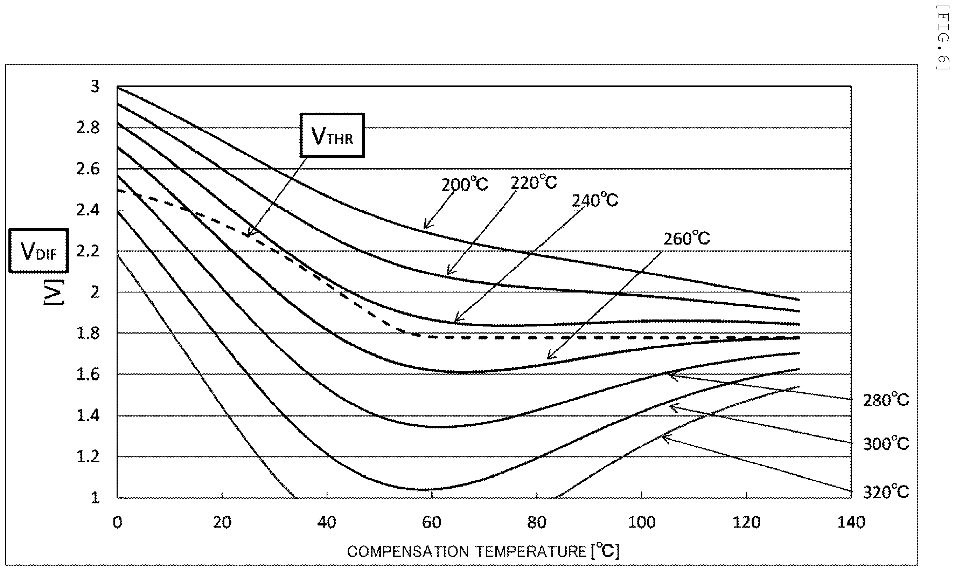

Using these adjustments, when the determination threshold V_{THR}-compensation temperature characteristic is set as shown in FIG. 6, for example, with respect to the compensation temperature-output voltage characteristic of the differential voltage V_{DIF} for the target (fuser roller) temperature T_{BB} (blackbody temperature) conditions of 200°C to 320°C, the high-temperature anomaly can be detected with high accuracy over a wide range of a compensation temperature of about 20°C to 130°C such that not the object temperature T_{BB} of 240°C, but the object temperature T_{BB} of 260°C or more is determined as the high-temperature anomaly. Note that FIG. 6 is a graph where the differential voltage V_{DIF} values calculated from the response of the thermistors (i.e., the detection thermistor voltage V_{DET} minus the compensation thermistor voltage V_{REF}) for the various compensation temperature T_{REF} conditions are plotted by changing the object temperature T_{BB}, and the curve line of the determination threshold V_{THR} is also plotted with a dashed line.

As describe above, since the abnormal temperature detection circuit 1 of the present embodiment includes the threshold setting circuit portion C2 configured to output a determination threshold V_{THR} for determining whether a temperature detected by the detection thermistor R7 is an abnormal temperature in accordance with the output of the compensation thermistor R2, and the abnormal temperature determination circuit portion C3 configured to output an abnormal temperature detection signal V_{COM} when the differential output V_{DIF} is lower than the determination threshold V_{THR} that has been output, the determination threshold V_{THR} can be changed in accordance with the nonlinearity of the resistance-temperature characteristic of a thermistor by using a compensation temperature output V_{REF} for setting the determination threshold V_{THR}. As a consequence, an abnormal temperature can be detected with high accuracy over a wider range of temperature compared with the prior art.

In addition, since the threshold setting circuit portion C2 has the arithmetic section configured to change a determination threshold V_{THR} in accordance with the output of the compensation thermistor R2 when a compensation temperature obtained by the output of the compensation thermistor R2 is lower than the predetermined temperature, and to set the determination threshold V_{THR} as a constant fixed value when a compensation temperature obtained by the output of the compensation thermistor R2 is higher than the predetermined temperature, the determination threshold V_{THR} can be divided into a variable area and a constant area in accordance with the nonlinearity of the resistance-temperature characteristic of a thermistor. As a consequence, the high-temperature anomaly can be detected with high accuracy by a simple circuit configuration.

Furthermore, since the threshold setting circuit portion C2 can adjust the input level of the output of the compensation thermistor R2 using a voltage divider circuit composed of two resistances R10 and R13, the threshold voltage V_{THR} for the dependent part of the compensation thermistor voltage V_{REF} can be readily changed based on the ratio of the two resistances R10 and R13.

The technical scope of the present invention is not limited to the aforementioned embodiments, but the present invention may be modified in various ways without departing from the scope or teaching of the present invention.

### [Reference Numerals]

1: abnormal temperature detection circuit, C1: differential output detection circuit portion, C2: threshold setting circuit portion, C3: abnormal temperature determination circuit portion, R2: compensation thermistor, R7: detection thermistor

## Claims

1. An abnormal temperature detection circuit comprising:
a differential output detection circuit portion having a detection thermistor and a compensation thermistor configured to detect a differential output between an output of the detection thermistor and an output of the compensation thermistor;
a threshold setting circuit portion that is an analog circuit configured to change a determination threshold for determining whether a temperature detected by the detection thermistor is an abnormal temperature in accordance with the output of the compensation thermistor and to output the changed determination threshold; and
an abnormal temperature determination circuit portion configured to output an abnormal temperature detection signal when the differential output is lower than the determination threshold that has been output.

2. The abnormal temperature detection circuit according to claim 1, wherein the threshold setting circuit portion is configured to change the determination threshold in accordance with the output of the compensation thermistor when a compensation temperature obtained by the output of the compensation thermistor is lower than the predetermined temperature, and to set the determination threshold as a constant fixed value when the compensation temperature obtained by the output of the compensation thermistor is higher than the predetermined temperature.

3. The abnormal temperature detection circuit according to claim 1, wherein the threshold setting circuit portion can adjust the input level of the output of the compensation thermistor using a voltage divider circuit composed of two resistances.

4. The abnormal temperature detection circuit according to claim 1, wherein the detection thermistor is a temperature sensor for measuring a temperature of a fuser roller used in an image-forming apparatus.
